# EUROPEAN PATENT SPECIFICATION

(11) **EP 3 818 779 B1**
(45) Date of publication and mention of the grant of the patent: **06.07.2022**
(21) Application number: 19850829.3
(22) Date of filing: 04.09.2019
(51) Int. Cl.: H04W 76/27, H04W 72/04

(54) **METHODS AND SYSTEM FOR TRANSMISSION DURING UPLINK-ENHANCED IDLE MODE**
VERFAHREN UND SYSTEM ZUR DATENÜBERTRAGUNG WÄHREND DES UPLINK-ERWEITERTEN RUHEMODUSES (ENHANCED IDLE-MODE)
PROCÉDÉS ET SYSTÈME DE TRANSMISSION PENDANT LE MODE VEILLE AMÉLIORÉ EN LIAISON MONTANTE (ENHANCED IDLE-MODE)

(30) Priority: 07.09.2018 US 201862728590 P
(43) Date of publication of application: 12.05.2021
(73) Proprietor: Google LLC, Mountain View, CA 94043 (US)
(72) Inventor: STAUFFER, Erik Richard, Mountain View, California 94043 (US); WANG, Jibing, Mountain View, California 94043 (US)
(74) Representative: Cupitt, Philip Leslie
(86) International application number: PCT/US2019/049529
(87) International publication number: WO 2020/086171

(56) References cited:
- ZTE: "Remaining issues for EDT", 3GPP DRAFT; R2-1712982 REMAINING ISSUES FOR EDT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Reno, Nevada, USA; 20171127 - 20171201 17 November 2017 (2017-11-17), XP051371827, Retrieved from the Internet: URL:http://www.3gpp.org/ftp/tsg%5Fran/WG2% 5FRL2/TSGR2%5F100/Docs/ [retrieved on 2017-11-17]
- ZTE: "Consideration on early data transmission in eFeMTC", 3GPP DRAFT; R2-1708380 CONSIDERATION ON EARLY DATA TRANSMISSION IN EFEMTC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDE , vol. RAN WG2, no. Berlin, Germany; 20170821 - 20170825 20 August 2017 (2017-08-20), XP051318252, Retrieved from the Internet: URL:http://www.3gpp.org/ftp/Meetings_3GPP_ SYNC/RAN2/Docs/ [retrieved on 2017-08-20]
- "3rd Generation Partnership Project; Technical Specification Group Services and System Aspects; Study on Machine-Type Communications (MTC) and other mobile data applications communications enhancements (Release 12)", 3GPP STANDARD; 3GPP TR 23.887, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V12.0.0, 20 December 2013 (2013-12-20), pages 1-151, XP050729146, [retrieved on 2013-12-20]

## Description

### BACKGROUND

Radio-resource control (RRC) protocols manage radio resources of a user equipment (UE) and a base station for wireless communications. In practice, RRC protocols support services and functions, which include broadcasting system information, initiating paging, establishing/releasing connections, selecting cells, handing over wireless connections, and managing quality of service.

In general, the UE may operate in one of two RRC modes, an RRC connected mode or an RRC idle mode. While operating in the RRC connected mode, the UE maintains uplink and downlink radio connections via scheduled resources of a unified air interface. A subset of the RRC connected mode, called RRC connected/inactive, is currently contemplated for 5G cellular but not yet defined. The RRC connected/inactive mode is later referred to as an RRC connected but inactive mode. Also while in the RRC connected mode, for example, the UE transmits or receives messages, transmits channel quality indicators to a base station, and may transmit acknowledgment (ACK) messages to verify reception of data.

In contrast, while operating in the RRC idle mode, the UE does not maintain an uplink radio connection with the base station. Therefore, the UE cannot send uplink messages and otherwise communicate with the base station. The RRC idle mode, however, is desirable in many instances because it saves battery power, wireless transmission resources, and may aid in keeping the UE from overheating, which has many negative consequences for the UE's performance.

3GPP Change Requests R2-1712982 and R2-1708380, as well as the 3GPP standard TR 23.887, all disclose transmission of uplink messages from a UE to a base station when the UE is in an uplink-enhanced idle mode using a UE-specific identifier and idle-mode uplink air interface resources.

### SUMMARY

The invention, which is defined in the independent claims 1, 9 and 15, describes methods and a system for an uplink-enhanced idle mode. Further embodiments are defined by dependent claims 2-8 and 10-14.

The described techniques and systems enable a user equipment (UE) to send uplink messages while in an idle mode. To do so, the user equipment may receive a radio-resource control release signal that includes a cell radio-network temporary-identifier and, in response to receiving the radio-resource control release signal, enter the uplink-enhanced idle mode. While in the uplink-enhanced idle mode, the UE may transmit au uplink message through previously established wireless resources using the cell radio-network temporary-identifier.

While operating in the conventional RRC idle mode of today, the UE cannot send uplink messages to a base station. Instead, to do so, the UE must "wake-up", exiting the conventional RRC idle mode of today, and enter the RRC connected mode to establish uplink and downlink radio connections with the base station. Further, even for a contemplated mode of RRC connected but inactive, the various possibilities of this mode include power-consuming actions not present in the RRC idle mode. Potential differences to the idle mode and the connected but inactive mode include paging and connection maintenance, for example, though others are also contemplated.

While in the RRC connected mode, power consumption levels of the UE increase due, in part, to uplink and downlink radio connections. The uplink-enhanced idle mode described herein, however, reduces uplink and downlink radio connections, resulting in the UE realizing power savings (in comparison to the RRC connected mode) while still providing a benefit of the UE being able to send uplink messages.

In some aspects, a method performed by a user equipment communicating with a base station is described. The method comprises the user equipment establishing an idle-mode uplink resource, establishing a user equipment (UE)-specific identifier, entering an uplink-enhanced idle mode, and transmitting, through the idle-mode uplink resource and using the UE-specific identifier, an uplink message during the uplink-enhanced idle mode and to a base station of the wireless communication network.

In some other aspects, a method performed by a base station communicating with a user equipment is described. As part of performing the method, the base station establishes, with the user equipment and during an active radio-resource control (RRC) connected mode form of communication with the user equipment, an idle-mode uplink resource for use by the user equipment during an uplink-enhanced idle mode. The base station then receives an uplink message from the user equipment when the user equipment is in the uplink-enhanced idle mode, the uplink message received through one of the idle-mode uplink resources and having a UE-specific identifier, the UE-specific identifier sufficient to differentiate the user equipment from other user equipment in communication with the base station. Following receipt of the uplink message, the base station uses or relays the received uplink message.

In further aspects, a user equipment is described. The user equipment includes a transceiver, a processor, and computer-readable storage media comprising instructions to implement an idle-mode manager application. The idle-mode manager application is configured to cause the user equipment to establish an idle-mode uplink resource, establish a user equipment (UE)-specific identifier, enter an uplink-enhanced idle mode, and transmit, through the idle-mode uplink resource and using the UE-specific identifier, an uplink message during the uplink-enhanced idle mode and to a base station of the wireless communication network.

The details of various implementations are set forth in the accompanying drawings and the following description. Other features and advantages will be apparent from the description and drawings, and from the claims. This summary is provided to introduce subject matter that is further described in the Detailed Description and Drawings.

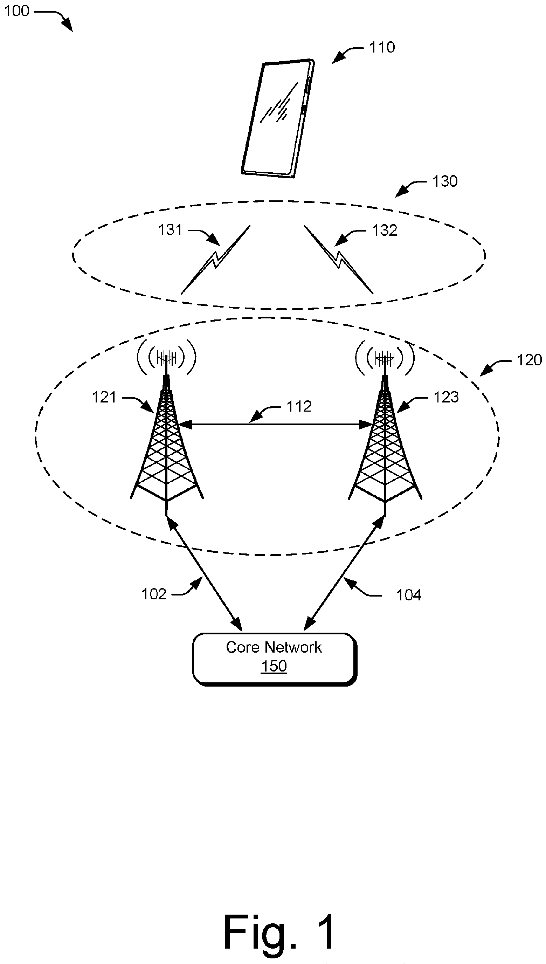

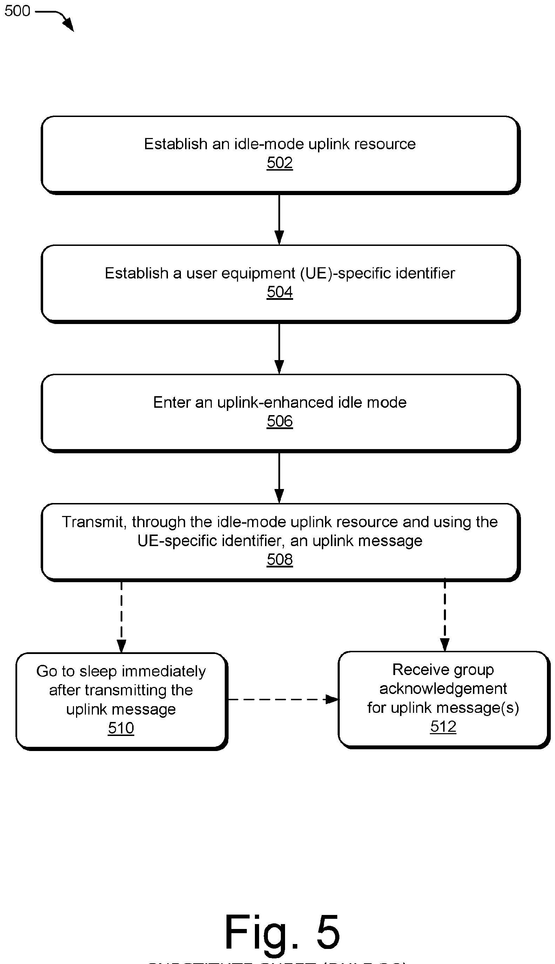

The invention is defined by the combination of all claimed features of each of the independent claims. The subject-matter, for instance named "example(s)"/"aspect(s)"/"embodiment(s)"/"invention(s)", in the description of figures 1-4 is not according to the invention as defined in the claims, in that not all of the claimed features are discussed. This subject matter serves to highlight and explain certain claimed features and is thus present for illustration purposes only. The example(s)/aspect(s)/embodiment(s)/ invention(s) in the description of fig. 5-6 are according to the invention as defined in the claims.

### BRIEF DESCRIPTION OF THE DRAWINGS

This document describes details for uplink communications while a user equipment (UE) is in an uplink-enhanced idle mode. The use of the same reference numbers in different instances in the description and the figures may indicate like elements:
FIG. 1 illustrates an example operating environment in which various aspects of message communications while a UE is in an uplink-enhanced idle mode can be implemented.
FIG. 2 illustrates an example interface that extends between a user equipment and a base station, which is associated with message communications while the UE is operating in an uplink-enhanced idle mode.
FIG. 3 illustrates an example device diagram for devices that can implement various aspects of message communications while a UE is operating in an uplink-enhanced idle mode.
FIG. 4 illustrates details of example signaling and control transactions of a user equipment (UE) and a base station in accordance with aspects of the UE operating in an uplink-enhanced idle mode.
FIG. 5 illustrates an example method performed by a user equipment communicating with a base station in accordance with aspects of the UE operating in an uplink-enhanced idle mode.
FIG. 6 illustrates an example method performed by a base station communicating with a user equipment in accordance with aspects of the UE operating in an uplink-enhanced idle mode.

### DETAILED DESCRIPTION

The present disclosure describes techniques and systems for wireless communications between a base station and a user equipment operating in an uplink-enhanced idle mode. This uplink-enhanced idle mode is especially applicable to low datarate wireless communications with high latency tolerances, and can coexist with a radio-resource control connected modes (active/inactive) and a radio-resource control idle mode. Example case uses of low data rate wireless communications with high latency tolerances include wireless communications that may be associated with Intemet-of-Things (IoT) devices. While features and concepts of the described systems and methods for such wireless communications can be implemented in any number of different environments, systems, devices, and/or various configurations, aspects are described in the context of the following example devices, systems, and configurations.

### Operating Environment

FIG. 1 illustrates an example environment 100, which includes a user equipment 110 (UE 110). This UE 110 can communicate with base stations 120 (illustrated as base stations 121 and 123) through wireless communication links 130 (illustrated as wireless communication links 131 and 132). In this example, the UE 110 is implemented as a smartphone. Although illustrated as a smartphone, the UE 110 may be implemented as any suitable computing or electronic device, such as a mobile communication device, a modem, cellular phone, gaming device, navigation device, media device, laptop computer, desktop computer, tablet computer, smart appliance, vehicle-based communication system, and the like. The base station 120 (e.g., an Evolved Universal Terrestrial Radio Access Network Node B, E-UTRAN Node B, evolved Node B, eNodeB, eNB, Next Generation Node B, gNode B, gNB, or the like) may be implemented in a macrocell, microcell, small cell, picocell, or the like, or any combination thereof.

The base station 120 communicates with the UE 110 via the wireless communication links 130, which may be implemented as any suitable type of wireless link via resources of a unified air interface. The wireless communication links 130 can include a downlink radio connection, an uplink radio connection, or both. The wireless communication links 130 may include wireless communication links or bearers implemented using any suitable communication protocol or standard, or combination of communication protocols or standards such as 3rd Generation Partnership Project Long-Term Evolution (3GPP LTE), Fifth Generation New Radio (5G NR), and so forth. The wireless communication links 130 may be aggregated in a carrier aggregation to provide a higher data rate for the UE 110. The wireless communication links 130 may be configured for Coordinated Multipoint (CoMP) communication with the UE 110. Additionally, multiple wireless links 130 may be configured for single-RAT dual connectivity or multi-RAT dual connectivity (MR-DC).

A multiple of the base station 120 collectively forms a Radio Access Network (RAN, Evolved Universal Terrestrial Radio Access Network, E-UTRAN, 5G NR RAN or NR RAN). The base station 120 in the Radio Access network connects to a core network 150, which may be, for example, a Fifth Generation Core Network or an Evolved Packet Core network.

As illustrated, the base station 121 and the base station 123 connect, via links 102 and 104 respectively, to the core network 150 via interfaces that may be an interface such as an NG2 interface for control-plane signaling, an NG3 interface for user-plane data communications, or an S1 interface for control-plane signaling and user-plane data communications. In addition to connections to core network 150, the base stations 120 may communicate with each other via an interface. As illustrated, the base station 123 and the base station 123 communicate with each other via an interface 112 that may be, for example, an Xn interface or an X2 interface.

Within the environment 100, the UE 110 can operate in either a radio-resource control (RRC) connected mode, during which the UE 110 and the base station 120 maintain uplink and downlink radio connections, or in an uplink-enhanced idle mode (e.g., an uplink-enhanced radio-resource control (RRC) idle mode) during which uplink and downlink radio connections are not maintained.

Furthermore, within the environment 100, wireless communications between the UE 110 and the base station 120 may be associated to a cell radio-network temporary-identifier (CRNTI). The CRNTI, in general, may indicate, to both the UE 110 and the base station 120, specific resources of the unified air interface resource that supports wireless communications between the UE 110 and the base station 120 if the UE 110 is operating in the uplink-enhanced idle mode. The CRNTI may also be used to scramble and decode messages transmitted from the UE 110 to the base station 120 while the UE 110 is operating in the uplink-enhanced idle mode.

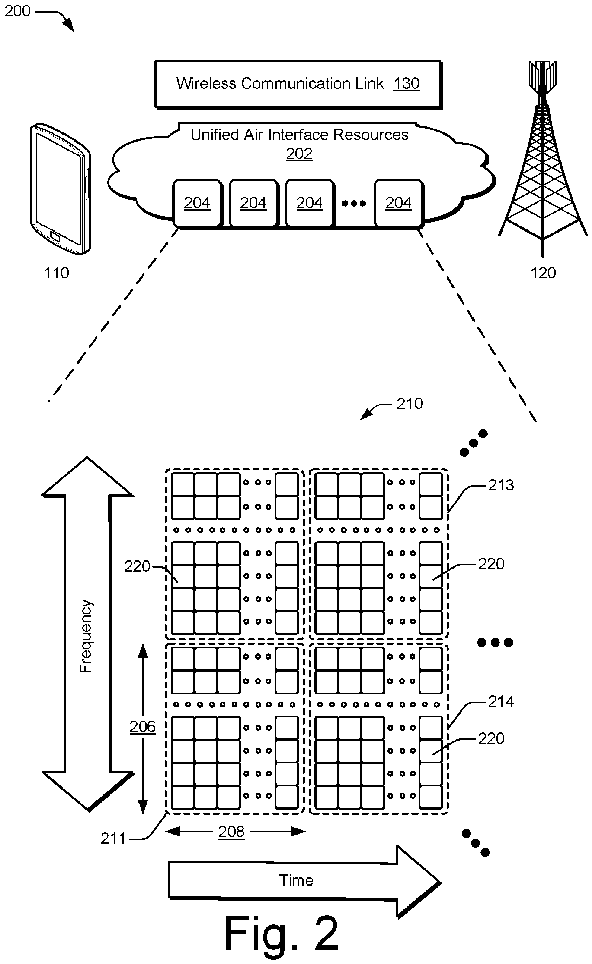

FIG. 2 illustrates an example interface 200 that extends between a UE (e.g., the UE 110) and a base station (e.g., the base station 120), which is associated with message communications while the UE 110 is operating in an uplink-enhanced idle mode. The example interface 200 includes unified air interface resources 202, which can be divided into resource units 204, each of which occupies some intersection of frequency spectrum and elapsed time. A portion of the unified air interface resources 202 is illustrated graphically in a grid or matrix having multiple resource blocks 210, including example resource blocks 211, 212, 213, 214. An example of a resource unit 204 therefore includes at least one resource block 210. As shown, time is depicted along the horizontal dimension as the abscissa axis, and frequency is depicted along the vertical dimension as the ordinate axis. The unified air interface resources 202, as defined by a given communication protocol or standard, may span any suitable specified frequency range, and/or may be divided into intervals of any specified duration. Increments of time can correspond to, for example, milliseconds (mSec). Increments of frequency can correspond to, for example, megahertz (MHz).

In example operations generally, the base station 120 schedules and allocates portions (e.g., resource units 204) of the unified air interface resources 202 for uplink and downlink communications. Each resource block 211 of network access resources may be allocated to support a communication link 130 of the user equipment 110. In the lower left corner of the grid, the resource block 211 may span, as defined by a given communication protocol, a specified frequency range 206 and comprise multiple subcarriers or frequency sub-bands. The resource block 211 may include any suitable number of subcarriers (e.g., 12) that each correspond to a respective portion (e.g., 15 kHz) of the specified frequency range 206 (e.g., 180 kHz). The resource block 211 may also span, as defined by the given communication protocol, a specified time interval 208 or time slot (e.g., lasting approximately one-half millisecond or seven orthogonal frequency-division multiplexing (OFDM) symbols). The time interval 208 includes subintervals that may each correspond to a symbol, such as an OFDM symbol. As shown in FIG. 2, each resource block 210 may include multiple resource elements 220 (REs) that correspond to, or are defined by, a subcarrier of the frequency range 206 and a subinterval (or symbol) of the time interval 208. Alternatively, a given resource element 220 may span more than one frequency subcarrier or symbol. Thus, a resource unit 204 may include at least one resource block 210, at least one resource element 220, and so forth.

Wireless communications between the UE 110 and the base station 120, such as scheduling and allocations of the unified air interface resources 202, can be performed dynamically by the base station 120. In one aspect, for the UE 110 to operate in the aforementioned radio-resource control (RRC) connected mode, the base station 120 may schedule and allocate available resource units 204 to support uplink and downlink communications between the UE 110 and the base station 120. In another aspect, for the UE 110 to operate in the aforementioned enhanced radio-resource control (RRC) idle mode, the base station may schedule and allocate available resource units 204 for intermittent uplink and downlink communications between the UE 110 and the base station 120.

As an example of scheduling and allocation in accordance with the RRC connected mode, the base station 120 may schedule and allocate available resource units 204 in the form of transport channels of the unified air interface resources 202. In general, the transport channels of the unified air interface resources 202, in accordance with wireless communication protocols, are used for transporting information between the base station 120 and the UE 110. Using the transport channels, the base station 120 and the UE 110 may exchange information that defines how and with what type of characteristics data is transferring from the base station 120 to the UE 110. The scheduled and allocated transport channels may support uplink communications from the UE 110 to the base station 120, and include, for example, an uplink shared channel (UL-SCH) or a random access channel (RACH). The scheduled and allocated transport channels may also support downlink communications from the base station 120 to the user equipment and can include, as an example, a broadcast channel (BCH), a downlink shared channel (DL-SCH), a paging channel (PCH), or a multicast channel (MCH). In accordance with the example of the scheduled and allocated transport channels, the UE 110 and the base station 120 may maintain uplink and downlink radio connections using these channels.

As an example of scheduling and allocation in accordance with the uplink-enhanced idle mode, the base station 120 may schedule and allocate, in accordance with intermittent time periods, available resource units 204 of the unified air interface resources 202. The resource units 204 may comprise the aforementioned paging channel (PCH), as well as physical channels such as a physical downlink control channel (PDCCH), a physical random access channel (PRACH), and a physical uplink control channel (PUCCH). As part of scheduling and allocation, the base station 120 may associated a cell radio-network temporary-identifier (CRNTI) to the scheduled and allocated resource units 204. As noted elsewhere herein, the resources for use in the uplink-enhanced idle mode may be determined semi-statically and be part of a periodic or non-periodic schedule.

The example combination of the PCH channel, the PDCCH channel, and the PRACH channel is a non-limiting example of scheduling of and allocating channels of the unified air interface resources 202. Scheduling and allocation of other combinations of channels that are available via the unified air interface resources 202 may be possible in the uplink-enhanced idle mode.

In certain instances, the base station may 120 may determine the cell radio-network temporary-identifier (CRNTI), while in other instances the core network 150 may provide the CRNTI to the base station 120. In either instance, the base station may provide the CRNTI to the UE 110 as part of a radio resource-control release message that causes the UE 110 to enter the uplink-enhanced idle mode.

### Example Devices

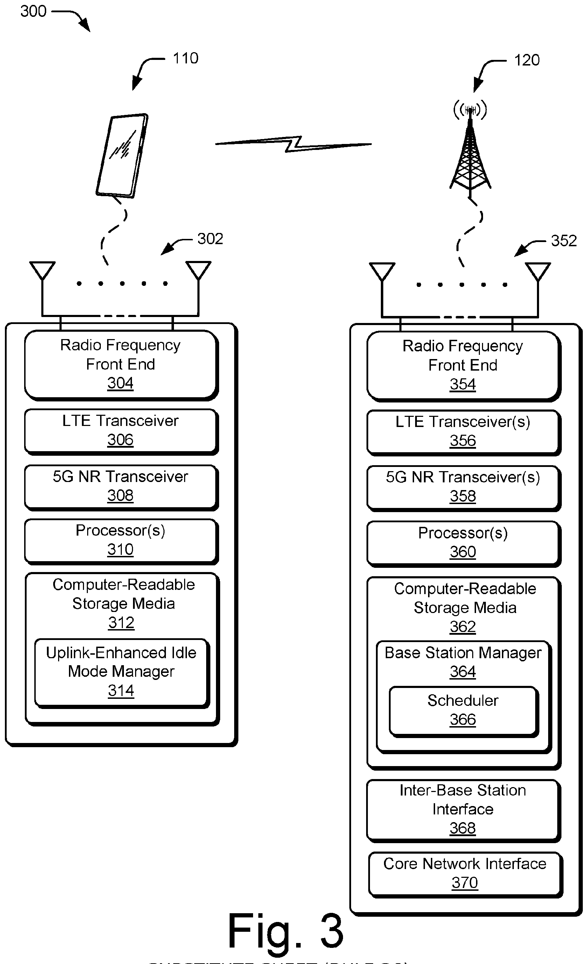

FIG. 3 illustrates an example device diagram 300 of a UE (e.g., the UE 110 of Fig. 1) and a base station (e.g., the base stations 120 of Fig. 1). The UE 110 and the base station 120 may include additional functions and interfaces that are omitted from FIG. 3 for the sake of clarity. The UE 110 includes antennas 302, a radio frequency front end 304 (RF front end 304), an LTE transceiver 306, and a 5G NR transceiver 308 for communicating with base stations 120. The RF front end 304 of the UE 110 can couple or connect the LTE transceiver 306, and the 5G NR transceiver 308 to the antennas 302 to facilitate various types of wireless communication. The antennas 302 of the UE 110 may include an array of multiple antennas that are configured similar to or differently from each other. The antennas 302 and the RF front end 304 can be tuned to, and/or be tunable to, frequency bands defined by the 3GPP LTE and 5G NR communication standards and implemented by the LTE transceiver 306, and/or the 5G NR transceiver 308. Additionally, the antennas 302, the RF front end 304, the LTE transceiver 306, and/or the 5G NR transceiver 308 may be configured to support beamforming for the transmission and reception of communications with the base stations 120. By way of example and not limitation, the antennas 302 and the RF front end 304 can be implemented for operation in sub-gigahertz bands, sub-6 GHZ bands, and/or above 6 GHz bands that are defined by the 3GPP LTE and 5G NR communication standards.

The UE 110 also includes processor(s) 310 and computer-readable storage media 312 (CRM 312). The processor 310 may be a single core processor or a multiple core processor composed of a variety of materials, such as silicon, polysilicon, high-K dielectric, copper, and so on. The computer-readable storage media described herein excludes propagating signals. CRM 312 may include any suitable memory or storage device such as random-access memory (RAM), static RAM (SRAM), dynamic RAM (DRAM), non-volatile RAM (NVRAM), read-only memory (ROM), or Flash memory.

CRM 312 also includes an uplink-enhanced idle mode manager 314. Alternately or additionally, the uplink-enhanced idle mode manager 314 may be implemented in whole or part as hardware logic or circuitry integrated with or separate from other components of the UE 110. In at least some aspects, the uplink-enhanced idle mode manager 314 configures the RF front end 304, the LTE transceiver 306, and/or the 5G NR transceiver 308 to implement the techniques for operating in the uplink-enhanced idle mode as described herein.

The device diagram for the base station 120, shown in FIG. 3, includes a single network node (e.g., a gNode B). The functionality of the base station 120 may be distributed across multiple network nodes or devices and may be distributed in any fashion suitable to perform the functions described herein. The base stations 120 include antennas 352, a radio frequency front end 354 (RF front end 354), LTE transceivers 356, and/or 5G NR transceivers 358 for communicating with the UE 110. The RF front end 354 of the base stations 120 can couple or connect the LTE transceivers 356 and the 5G NR transceivers 358 to the antennas 352 to facilitate various types of wireless communication. The antennas 352 of the base stations 120 may include an array of multiple antennas that are configured similar to or differently from each other. The antennas 352 and the RF front end 354 can be tuned to, and/or be tunable to, frequency bands defined by the 3GPP LTE and 5G NR communication standards, and implemented by the LTE transceivers 356, and/or the 5G NR transceivers 358. Additionally, the antennas 352, the RF front end 354, the LTE transceivers 356, and/or the 5G NR transceivers 358 may be configured to support beamforming, such as Massive-MIMO, for the transmission and reception of communications with the UE 110.

The base station 120 also include processor(s) 360 and computer-readable storage media 362 (CRM 362). The processor 360 may be a single core processor or a multiple core processor composed of a variety of materials, such as silicon, polysilicon, high-K dielectric, copper, and so on. CRM 362 may include any suitable memory or storage device such as random-access memory (RAM), static RAM (SRAM), dynamic RAM (DRAM), non-volatile RAM (NVRAM), read-only memory (ROM), or Flash memory. The CRM 362 also includes a base station manager 364. Alternately or additionally, the base station manager 364 may be implemented in whole or part as hardware logic or circuitry integrated with or separate from other components of the base station 120. The base station manager 364 includes a scheduler 366 that schedules and allocates resources of a unified air interface supporting wireless communications between the UE 110 and the base station 120. The base station 120 may execute code of the scheduler 366 to schedule resources a unified air interface (e.g., the unified air interface resources 202 of FIG. 2) in accordance with UE-specific identifier, such as a cell radio-network temporary-identifier or other identifier capable of enabling the base station 120 to differentiate between the UE 110 and other user equipment.

In at least some aspects, the base station manager 364 configures the RF front end 354, the LTE transceiver 356, and/or the 5G NR transceiver 358 to implement the techniques for supporting wireless communications from the UE 110 in support of the uplink-enhanced idle mode as described herein, such as uplink messages sent during an idle mode.

The base station 120 includes an inter-base station interface 368, such as an Xn and/or X2 interface, which the base station manager 364 configures to exchange user-plane and control-plane data between with base station to manage the communication of the base station 120 with the UE 110. The base station 120 also includes a core network interface 370 that the base station manager 364 configures to exchange user-plane and control-plane signaling with core network functions and entities.

### Uplink-Enhanced Idle Mode Signaling and Control Transactions

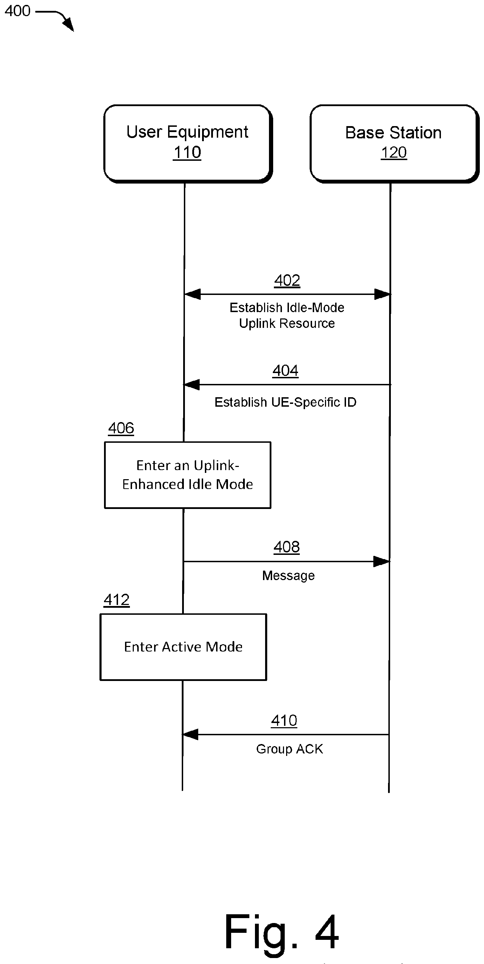

FIG. 4 illustrates details of example signaling and control transactions 400 of a user equipment (UE) and a base station in accordance with various aspects of the UE operating in an uplink-enhanced idle mode. The UE (e.g., the UE 110 of FIG. 1) and the base station (e.g., the base station 120 of FIG. 1) may wirelessly communicate and format the signaling and control transactions in accordance with frames or subframes of wireless communication protocols.

At 402, the user equipment 110 and the base station 120 may, via resources of a unified air interface (e.g., the unified air interface resources 202 of FIG. 2), exchange signaling and information as part of establishing an idle-mode uplink resource. This idle-mode uplink air interface resource can be used by the user equipment 110, at a later time, to send an uplink message. As noted in part above, this resource can set a time and frequency for later uplink messages, and may include a RACH resource with a time slot and frequency. This RACH resource can be scrambled with an identifier, which can aid in the base station 120 understanding which user equipment sent the uplink message, and is described in detail above and further below.

At 404, which can be performed prior to, after, or during the operation of establishing an idle-mode uplink resource at 402, the user equipment 110 and the base station 120 establish a user-equipment-specific identifier (UE-specific ID). This identifier can be assigned by the base station 120, such as through determination of the UE-specific ID and then transmitting this UE-specific ID through a UL_IDLE_RNTI, e.g., through allocation with an RRC connection, release, or redirect message. This identifier can be used, as noted above, to scramble the uplink message. In more detail, for operations 402 and 404, the base station 120 may send, to the user equipment 110, a radio-resource control (RRC) release signal. The RRC-release signal, a control transaction that causes the user equipment 110 to enter an uplink-enhanced idle mode, may include a cell radio-network temporary-identifier (CRNTI). In some instances, the base station 120 may determine the CRNTI while in other instances the base station 120 may receive the CRNTI from another entity, such as a core network (e.g., the core network 150 of FIG. 1) or another base station.

At 406, the user equipment 110 enters an uplink-enhanced idle mode. The above operations 402 and 404 can be performed during an active RRC connected mode, though this is not strictly required. In either case, however, the user equipment 110 enters the uplink-enhanced idle mode after having a UE-specific ID and knowing which resource (e.g., the idle-mode uplink resource) through which to send the uplink message.

At 408, the user equipment 110 sends an uplink message through the idle-mode uplink resource. The user equipment 110 may forgo a particular one or many of the resources, such as forgoing sending any uplink message at various pre-established times. At some time, however, the user equipment 110 sends the uplink message. Note that the user equipment 110 need not wait for an acknowledgment from the base station 120. Instead, the user equipment 110 may simply go to sleep, even immediately after sending the uplink message. This is one way in which bandwidth and battery power can be preserved, as well as forgo operations that may increase the temperature of the user equipment 110.

Furthermore, the user equipment 110 may send multiple uplink messages, either through each resource or over some various number of future resources. Assume, for example, that a RACH resource includes a time slot for transmission every 100 milliseconds. The user equipment 110 may send an uplink message at 100, 400, 500, 1100, and 1700 milliseconds after entering the uplink-enhanced idle mode (assume for simplicity that is performed immediately and at time zero).

In some cases the user equipment 110 may send the uplink message as a unicast short-message service (SMS) or a group of SMS messages. These can be scrambled, here in accordance with the CRNTI received at 404. In other instances the uplink message may be encrypted.

Optionally at 410, the base station 120 sends a group acknowledgement for some number of prior uplink messages sent during the uplink-enhanced idle mode. The base station 120 may send the group ACK signal via a physical random access channel (PRACH) resource of the unified air interface or in other manners common to sending messages from a base station to a user equipment. This acknowledgement may indicate a need to resend an uplink message, or indicate simply that the message was not received but not that anything needs to be done (in some cases resending a message is pointless, as the value of the message was in its reception time, which has passed). Further, the acknowledgment may be used to improve later communications, such as to change resources used for future uplink-enhanced idle modes.

Continuing the example above, the user equipment 110, after sending some number of uplink messages, would then receive a group acknowledgment concerning (if all were successful), uplink messages sent at 100, 400, 500, 1100, and 1700 milliseconds from entering the uplink-enhanced idle mode. This communication can be part of a future RRC connected active mode and include back-and-forth communication, though it may instead be sent as part of a message for receipt at a particular time, even without being in an active mode. If part of an RRC connected active mode, at 412, the user equipment 110 enters an active mode with the base station 120 prior to receiving the group acknowledgment.

The described signaling and control transactions are by way of example only, and are not constrained by the sequence or order of presentation unless so indicated. Furthermore, in certain aspects, additional signaling and control transactions may augment or replace the described signaling and control transactions. Such additional signaling and control transactions may include, for example, signaling and control transactions associated with the base station 120 communicating with a core network (e.g., the core network 150 to receive a CRNTI) or the base station 120 communicating with other base stations (to synchronize transmission of messages of a group of messages).

### Uplink-Enhanced Idle Mode Methods

FIG. 5 illustrates a method (500), with all the steps of the invention, thus a method (500) being part of the claimed invention, performed by a user equipment communicating with a base station in accordance with aspects of the user equipment operating in an uplink-enhanced idle mode. Operations performed by the UE (e.g., the UE 110 of FIG. 1) and the base station (e.g., the base station 120 of FIG. 1) are not limited to the order or sequence of operations as described below. Furthermore, and in general, operations performed by the UE 110 are caused by the processor 310 of the UE 110 executing code or instructions of the uplink-enhanced idle mode manager 314.

At operation 502, an idle-mode uplink resource is established. This establishing of the idle-mode uplink air interface resource can be through reception, from the base station of the wireless communication network, of a schedule of unified air interface resources through which to transmit the uplink message or other, additional uplink messages. This schedule can be requested, established, or negotiated between the UE 110 and the base station 120 (or another network element such as a core network 150). In more detail, and as noted in part above, the schedule can be determined semi-statically and be periodic or non-periodic. Here the term semi-statically indicates that the actor determining the schedule (e.g., the base station manager 364 or the uplink-enhanced idle mode manager 314 of Fig 3) can determine the schedule previously to the use of the resource, such as during a prior RRC connected active mode involving the user equipment and the base station.

The schedule of resources, as noted, can be periodic or non-periodic. If periodic, a time between time slots of the resources is consistent. In some cases this periodicity is such that the schedule of unified air interface resources have pre-allocated resources with a fixed modulation and coding scheme (MCS). If non-periodic, the time slots are not consistently spaced in time. Thus, resources have time slots that have at least two different amounts of time between the start between two of the resources, such as 100, 350, 725, 1500, and 1750 milliseconds after entering the uplink-enhanced idle mode.

The schedule of idle-mode uplink resources can be received during a prior active mode (e.g., a radio-resource control (RRC) connected active mode between the UE 110 and the base station 120). Often in such a case, the resource is received through a radio-resource control (RRC) connection, release, or redirect message.

At operation 504, a user equipment-specific identifier (UE-specific identifier) is established. This identifier can be negotiated or determined by the UE 110, the base station 120, or the core network 150. In some cases, the UE-specific identifier is simply received, from the base station 120 of the wireless communication network, as part of a prior active RRC connected mode in which the UE 110 and the base station 120 were engaged.

This identifier can be unique, but this is not required; the identifier is sufficient to enable the base station 120 to differentiate between the UE 110 and other user equipment. While not required, it can also be used to scramble the uplink message and so forth. In one particular example, the UE-specific identifier is a cell radio-network temporary identifier (CRNTI).

At operation 506, the user equipment enters an uplink-enhanced idle mode. In many ways this is similar to conventional entry into a conventional idle mode, including the power savings, bandwidth savings to the base station and network, and potentially reducing the radiant heat of the user equipment, such as the mobile devices described above. This uplink-enhanced idle mode, however, permits uplink messages to be sent with few resources spent compared to an active RRC connected mode.

At operation 508, a plurality of uplink messages are transmitted during the uplink-enhanced idle mode and to a base station of the wireless communication network. As noted, this transmission of the uplink message is through the idle-mode uplink resource and using the UE-specific identifier. In an example, not being part of the claimed invention, this uplink message can be one message, such as a single short-message service (SMS) message, or a longer message sent in parts through this resource and later, scheduled air interface resources.

Optionally at operation 510, the user equipment goes to sleep immediately after transmitting the uplink message at operation 508. The UE 110 need not wait for an acknowledgement from the base station 120. Further, the UE 110 may go to sleep by shutting down, for the time being, the transceiver of the UE 110, saving various resources. The UE 110 may do so at various amounts of time, such as 1ms or less, 5, 10, or 20 milliseconds, and so forth.

An uplink message need not be a high priority, though it can be. Consider a case where the user equipment's resources are strained through low battery power, high temperature, or otherwise. The user equipment can forgo the higher energy costs, and in some cases time, needed to establish an active mode. Instead, the user equipment sends the uplink message through the scheduled air interface resources. If a high priority, the UE 110 may send the message at multiple times through the resources (e.g., at a first time slot, then another time slot). If a low priority, or one that is simply useful right at the time it is sent but not later, the UE 110 can send it once. For either of these priorities of messages, and for others, the UE 110 may or may not desire to know if the messages were received correctly. In the claimed invention, operation 512 is then performed.

At operation 512, the user equipment receives a group acknowledgment for the idle-mode uplink messages.

As noted, this is not required, though acknowledgment (e.g., ACK/NACK via PRACH) for the message(s) even if they are low priority, may aid in determining future resources likely to be successful, or cause some messages to be resent. In more detail, the reception of the acknowledgment can be after exiting the uplink-enhanced idle mode and entering an active RRC connected mode, and, during the active mode, receiving an acknowledgement from the base station concerning the uplink message and one or more other uplink messages also sent during the uplink-enhanced idle mode. Note also, however, that in some cases the user equipment may receive an acknowledgement, such as a group of them together after sending several uplink messages while in the uplink-enhanced idle mode, during the idle mode. In such a case, the uplink-enhanced idle mode also provisions a particular air interface resource at which to wake up and receive the downlink message, and then immediately go to sleep. This is analogous to the manner in which the UE 110 sends uplink messages but instead to receive a downlink at a particular time and/or frequency resource from the base station 120.

The example method 500 may be modified to include additional operations that include, for example, encrypting the uplink message, scrambling the uplink message based on the CRNTI, re-performing operations to send multiple uplink messages, and so forth.

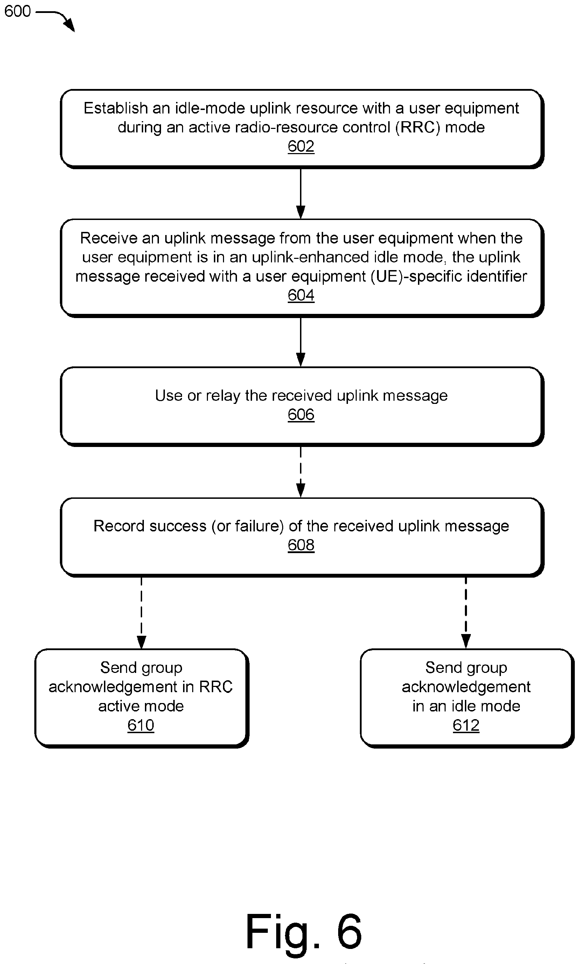

FIG. 6 illustrates a method (600) being part of the claimed invention and performed by a base station communicating with a user equipment in accordance with aspects of the user equipment operating in an uplink-enhanced idle mode. Operations performed by the base station (e.g., the base station 120 of FIG. 1) and the user equipment (e.g., the UE 110 of FIG. 1) are not limited to the order or sequence of operations as described below. Furthermore, and in general, operations performed by the base station 120 are caused by the processor 360 of the base station executing code or instructions of the base station manager 364.

At operation 602, the base station establishes an idle-mode uplink resource for use by the user equipment during an uplink-enhanced idle mode. This is established with the user equipment and during an active radio-resource control (RRC) mode form of communication with the user equipment, though other manners are permitted, so long as the schedule of idle-mode uplink resources are useful for transmitting uplink messages to the base station without needing to use a conventional active RRC connected mode.

Establishing the idle-mode uplink air interface resource may involve the base station determining a schedule of unified air interface resources available for the user equipment to transmit the uplink message. As noted in more detail above, the base station 120 may assign the resources through a UL IDLE RNTI. As noted above, the base station 120 may determine the schedule of unified air interface resources semi-statically, with periodic or non-periodic resources, transmit the schedule through an RRC connection, release, or redirect message, or instead received or negotiated with the core network 150, and so forth.

At 604, the base station receives a plurality of uplink messages through one of the idle-mode uplink resources and having a UE-specific identifier. As noted above, the UE-specific identifier is sufficient to differentiate the user equipment from other user equipment in communication with the base station. These uplink messages are received from the user equipment when the user equipment is in the uplink-enhanced idle mode. These uplink messages can be received as unicast messages as noted above.

At 606, the base station uses or relays the received uplink message. As with many communications, the base station can use, act on, store, or pass information on to other entities for which they were intended or at which they can be used.

At 608, the base station records a success or failure of the uplink message for later communication with the user equipment or a core network of the wireless communication network.

At 610, the base station transmits a group acknowledgement for the uplink messages and one or more other messages (if any) received. The group acknowledgement indicates a success or failure of reception by the base station of the plurality of uplink messages and one or more additional uplink messages sent by the user equipment during the uplink-enhanced idle mode. This can be performed during an active RRC mode, the active RRC mode occurring after ceasing the uplink-enhanced idle mode.

At 612, the base station transmits the group acknowledgement in an idle mode. The claimed invention covers both options, i.e. the transmission of said group acknowledgement either in uplink-enhanced idle mode or in active RRC mode after ceasing the uplink-enhanced idle mode.

Thus, in some cases, the base station 120 uses an air interface resource through which to communicate a group acknowledgement during the uplink-enhanced idle mode effective to permit the user equipment to receive the group acknowledgment without establishing an RRC active mode. For example, the base station 120 may provide a particular resource at which the UE 110 is instructed to wake up long enough to receive a group acknowledgement message (e.g., a group of ACK/NACK, each associated with an uplink message received during the UE's uplink-enhanced idle mode).

While not explicitly set out, the base station may determine and send the UE-specific identifier as noted above, though this may be established in various manners other than determined and sent by the base station 120.

The example method 600 may be modified to include additional operations that include, for example, decrypting the received uplink message, descrambling the received uplink message based on the UE-specific identifier (e.g., CRNTI), and so forth.

Although aspects of an uplink-enhanced idle mode have described in language specific to features and/or methods, the subject of the appended claims is not necessarily limited to the specific features or methods described. Rather, the specific features and methods are disclosed as example implementations of the uplink-enhanced idle mode. The scope of the invention is defined by the appended claims.

## Claims

1. A method (500) of message acknowledgement performed by a user equipment, UE, (110) of a wireless communication network, the method (500) comprising:
establishing (502), while the UE (110) is in an active radio resource control, RRC, connected mode and prior to entering an uplink-enhanced idle mode, one or more idle-mode uplink air interface resources for communicating with a base station, BS, (120) of the wireless communication network during the uplink-enhanced idle mode of the UE (110);
establishing (504) a UE-specific identifier with the BS (120);
entering (506) the uplink-enhanced idle mode;
transmitting (508) a plurality of uplink messages to the BS (120):
during the uplink-enhanced idle mode;
through at least one of the one or more idle-mode uplink air interface resources established with the BS (120); and
using the UE-specific identifier; and
following the transmitting (508) the plurality of uplink messages, receiving (512) a group acknowledgment from the BS (120) indicating a success or failure of reception by the BS (120) of each of the uplink messages.

2. The method (500) as recited in claim 1, further comprising:
going to sleep (510):
responsive to the transmitting (508) of at least one of the plurality of uplink messages to the BS (120);
prior to receiving (512) the group acknowledgement from the BS (120); and
without receiving another acknowledgement from the BS (120) indicating a success or failure of reception by the BS (120) of the at least one of the plurality of uplink messages.

3. The method (500) as recited in claim 1 or 2, further comprising:
following the transmitting (508) the plurality of uplink messages, exiting the uplink-enhanced idle mode and entering an active RRC connected mode,
wherein the receiving (512) the group acknowledgment comprises:
receiving the group acknowledgment during the active RRC connected mode.

4. The method (500) as recited in claim 1, 2, or 3, wherein the establishing (502) the one or more idle-mode uplink air interface resources comprises:
establishing a periodic or non-periodic schedule for the one or more idle-mode uplink air interface resources.

5. The method (500) as recited in any one of the preceding claims, wherein the establishing (502) the one or more idle-mode uplink air interface resources comprises:
receiving an indication of the one or more idle-mode uplink air interface resources from the BS (120) through an RRC connection message, an RRC release message, or an RRC redirect message.

6. The method (500) as recited in any one of the preceding claims, wherein the establishing (502) the one or more idle-mode uplink air interface resources comprises:
establishing the one or more idle-mode uplink air interface resources semi-statically.

7. The method (500) as recited in any one of the preceding claims, wherein the establishing (504) the UE-specific identifier comprises:
receiving, from the BS (120), the UE-specific identifier during the active RRC connected mode.

8. The method (500) as recited in any one of the preceding claims, wherein the establishing (502) the one or more idle-mode uplink air interface resources comprises:
receiving an indication of the one or more idle-mode uplink air interface resources from the BS (120) through a UL_IDLE_RNTI.

9. A method (600) of message acknowledgment performed by a base station, BS, (120) of a wireless communication network, the method (600) comprising:
establishing (602), with a user equipment, UE, (110) of the wireless communication network and while the UE (110) is in an active radio resource control, RRC, connected mode, one or more idle-mode uplink air interface resources for use by the UE (110) during an uplink-enhanced idle mode;
receiving (604) a plurality of uplink messages from the UE (110), the uplink messages:
received when the UE (110) is in the uplink-enhanced idle mode;
received over at least one of the one or more idle-mode uplink air interface resources; and
having a UE-specific identifier, the UE-specific identifier being sufficient to differentiate the UE from other UEs in communication with the BS;
recording (608) a success or failure of receipt of each of the uplink messages; and
transmitting (610), to the UE (110) and responsive to determining that the UE (110) is in the active RRC connected mode, a group acknowledgement to the UE (110), the group acknowledgement indicating the success or failure of receipt of each of the plurality of uplink messages.

10. The method (600) as recited in claim 9, further comprising:
providing the UE-specific identifier to the UE (110) while the UE (110) is in the active RRC connected mode and prior to the UE (110) being in the uplink-enhanced idle mode.

11. The method (600) as recited in claim 9 or 10, further comprising:
determining a periodic or non-periodic schedule for the one or more idle-mode uplink air interface resources,
wherein the establishing (602) the one or more idle-mode uplink air interface resource comprises:
transmitting, to the UE (110), the periodic or non-periodic schedule for the one or more idle-mode uplink interface resources.

12. The method (600) as recited in claim 9, 10, or 11, wherein establishing (602) one or more idle-mode uplink air interface resources comprises:
transmitting an indication of the one or more idle-mode uplink air interface resources through an RRC connection message, an RRC release message, or an RRC redirect message.

13. The method (600) as recited in any one of claims 9 to 12, wherein the establishing (602) the one or more idle-mode uplink air interface resources comprises:
establishing at least one of the one or more idle-mode uplink air interface resources as a random access channel, RACH, resource.

14. The method (500, 600) as recited in any one of the preceding claims, wherein at least one of the uplink messages is a unicast message or a short-message service, SMS, message.

15. A system for performing the method (500, 600) as recited in any one of the preceding claims.

## Patentansprüche

1. Verfahren (500) zur Quittierung von Nachrichten, welches durch ein Benutzergerät, UE, (110) eines drahtlosen Kommunikationsnetzwerks durchgeführt wird, wobei das Verfahren (500) Folgendes umfasst:
Einrichten (502), während das UE (110) in einem aktiven verbundenen Funkressourcenkontroll-, RRC-, Modus ist und vor dem Eintritt in einen Uplink-gestützten Ruhemodus, einer oder mehrerer Uplink-Ruhemodus-Funkschnittstellenressourcen zur Kommunikation mit einer Basisstation, BS, (120) des drahtlosen Kommunikationsnetzwerks während des Uplink-gestützten Ruhemodus des UE (110);
Einrichten (504) einer UE-spezifischen Kennung mit der BS (120);
Eintreten (506) in den Uplink-gestützten Ruhemodus;
Übertragen (508) einer Vielzahl von Uplink-Nachrichten an die BS (120):
während des Uplink-gestützten Ruhemodus;
durch mindestens eine der einen oder der mehreren mit der BS (120) eingerichteten Uplink-Ruhemodus-Funkschnittstellenressourcen; und
Verwenden der UE-spezischen Kennung; und
nach der Übertragung (508) der Vielzahl von Uplink-Nachrichten, Empfangen (512) einer Sammelquittierung von der BS (120), welche Erfolg oder Fehlschlag des Empfangs durch die BS (120) für jede der Uplink-Nachrichten angibt.

2. Verfahren (500) nach Anspruch 1, ferner Folgendes umfassend:
Einschlafen (510):
in Reaktion auf die Übertragung (508) mindestens einer der Vielzahl von Uplink-Nachrichten an die BS (120);
vor Empfang (512) der Sammelquittierung von der BS (120); und
ohne Empfang einer anderen Quittierung von der BS (120), welche Erfolg oder Fehlschlag des Empfangs durch die BS (120) der mindestens einer der Vielzahl von Uplink-Nachrichten angibt.

3. Verfahren (500) nach Anspruch 1 oder 2 , ferner Folgendes umfassend:
Nach der Übertragung (508) der Vielzahl von Uplink-Nachrichten, Verlassen des Uplink-gestützten Ruhemodus und Eintreten in einen aktiven verbundenen RRC-Modus,
wobei der Empfang (512) der Sammelquittierung Folgendes umfasst:
Empfangen der Sammelquittierung während des aktiven verbundenen RRC-Modus.

4. Verfahren (500) nach Anspruch 1, 2 oder 3, wobei das Einrichten (502) der einen oder der mehreren Uplink-Ruhemodus-Funkschnittstellenressourcen Folgendes umfasst:
Erstellen eines periodischen oder nicht periodischen Zeitplans für die eine oder die mehreren Uplink-Ruhemodus-Funkschnittstellenressourcen.

5. Verfahren (500) nach einem der vorhergehenden Ansprüche, wobei das Einrichten (502) der einen oder der mehreren Uplink-Ruhemodus-Funkschnittstellenressourcen Folgendes umfasst:
Empfangen einer Anzeige von der einen oder den mehreren Uplink-Ruhemodus-Funkschnittstellenressourcen von der BS (120) durch eine RRC-Verbindungsnachricht, eine RRC-Freigabenachricht oder eine RRC-Umleitungsnachricht.

6. Verfahren (500) nach einem der vorhergehenden Ansprüche, wobei das Einrichten (502) der einen oder der mehreren Uplink-Ruhemodus-Funkschnittstellenressourcen Folgendes umfasst:
Einrichten der einen oder der mehreren Uplink-Ruhemodus-Funkschnittstellenressourcen in halbstatischer Weise.

7. Verfahren (500) nach einem der vorhergehenden Ansprüche, wobei das Einrichten (504) der UE-spezifischen Kennung Folgendes umfasst:
Empfangen, von der BS (120), der UE-spezifischen Kennung während des aktiven verbundenen RRC-Modus.

8. Verfahren (500) nach einem der vorhergehenden Ansprüche, wobei das Einrichten (502) der einen oder der mehreren Uplink-Ruhemodus-Funkschnittstellenressourcen Folgendes umfasst:
Empfangen einer Anzeige von der einen oder den mehreren Uplink-Ruhemodus-Funkschnittstellenressourcen von der BS (120) durch eine UL_IDLE_RNTI.

9. Verfahren (600) zur Quittierung von Nachrichten, welches durch eine Basisstation, BS, (120) eines drahtlosen Kommunikationsnetzwerks durchgeführt wird, wobei das Verfahren (600) Folgendes umfasst:
Einrichten (602), mit einem Benutzergerät, UE, (110) des drahtlosen Kommunikationsnetzwerks und während das UE (110) in einem aktiven verbundenen Funkressourcenkontroll-, RRC-, Modus ist, einer oder mehrerer Uplink-Ruhemodus-Funkschnittstellenressourcen zum Gebrauch durch das UE (110) während eines Uplink-gestützten Ruhemodus;
Empfangen (604) einer Vielzahl von Uplink-Nachrichten vom UE (110), wobei die Uplink-Nachrichten:
empfangen werden, wenn das UE (110) in dem Uplink-gestützten Ruhemodus ist;
über mindestens eine der einen oder der mehreren Uplink-Ruhemodus-Funkschnittstellenressourcen empfangen werden; und
eine UE-spezifische Kennung besitzen, wobei die UE-spezifische Kennung ausreicht, um das UE von anderen UEs in Kommunikation mit der BS zu unterscheiden;
Aufzeichnen (608) eines Erfolgs oder eines Fehlschlags des Empfangs einer jeden der Uplink-Nachrichten; und
Übertragen (610), an das UE (110) und in Reaktion auf das Bestimmen, dass das UE (110) in dem aktiven verbundenen RCC-Modus ist, einer Sammelquittierung an das UE (110), wobei die Sammelquittierung den Erfolg oder den Fehlschlag des Empfangs jeder der Vielzahl von Uplink-Nachrichten angibt.

10. Verfahren (600) nach Anspruch 9, ferner Folgendes umfassend:
Bereitstellen der UE-spezifischen Kennung an das UE (110), während das UE (110) in dem aktiven verbundenen RRC-Modus ist und bevor das UE (110) in dem Uplink-gestützten Ruhemodus ist.

11. Verfahren (600) nach Anspruch 9 oder 10 , ferner Folgendes umfassend:
Bestimmen eines periodischen oder nicht periodischen Zeitplans für die eine oder die mehreren Uplink-Ruhemodus-Funkschnittstellenressourcen,
wobei die Einrichtung (602) der einen oder der mehreren Uplink-Ruhemodus-Funkschnittstellenressourcen Folgendes umfasst:
Übertragen, an das UE (110), des periodischen oder nicht periodischen Zeitplans für die eine oder die mehreren Uplink-Ruhemodus-Funkschnittstellenressourcen.

12. Verfahren (600) nach Anspruch 9, 10 oder 11, wobei das Einrichten (602) einer oder mehrerer Uplink-Ruhemodus-Funkschnittstellenressourcen Folgendes umfasst:
Übertragen einer Anzeige von der einen oder den mehreren Uplink-Ruhemodus-Funkschnittstellenressourcen durch eine RRC-Verbindungsnachricht, eine RRC-Freigabenachricht oder eine RRC-Umleitungsnachricht.

13. Verfahren (600) nach einem der Ansprüche 9 bis 12, wobei das Einrichten (602) der einen oder der mehreren Uplink-Ruhemodus-Funkschnittstellenressourcen Folgendes umfasst:
Einrichten mindestens einer der einen oder der mehreren Uplink-Ruhemodus-Funkschnittstellenressourcen als eine Zufallszugriffskanalressource, RACH; und

14. Verfahren (500, 600) nach einem der vorhergehenden Ansprüche, wobei mindestens eine der Uplink-Nachrichten ein Unicast-Nachricht oder ein Kurznachricht-Dienst, SMS-, Nachricht ist.

15. System zum Durchführen des Verfahrens (500, 600) nach einem der vorhergehenden Ansprüche.

## Revendications

1. Procédé (500) d'accusé de réception de message réalisé par un équipement d'utilisateur (110), UE, d'un réseau de communication sans fil, le procédé (500) comprenant:
l'établissement (502), pendant que l'UE (110) se trouve dans un mode connecté de contrôle actif de ressource radio, RRC, et avant d'entrer dans un mode inactif amélioré par liaison montante, d'une ou plusieurs ressources d'interface radio en liaison montante en mode inactif pour communiquer avec une station de base (120), BS, du réseau de communication sans fil lors du mode inactif amélioré par liaison montante de l'UE (110);
l'établissement (504) d'un identifiant spécifique à l'UE avec la BS (120);
le fait d'entrer (506) dans le mode inactif amélioré par liaison montante;
la transmission (508) d'une pluralité de messages de liaison montante à la BS (120):
lors du mode inactif amélioré par liaison montante;
à travers au moins l'un parmi les une ou plusieurs ressources d'interface radio en liaison montante en mode inactif établies avec la BS (120); et
l'utilisation de l'identifiant spécifique à l'UE; et
après la transmission (508) de la pluralité de messages de liaison montante, la réception (512) d'un accusé de réception de groupe à partir de la BS (120) indiquant un succès ou un échec de réception par la BS (120) de chacun des messages de liaison montante.

2. Procédé (500) selon la revendication 1, comprenant en outre:
la mise en veille (510):
en réponse à la transmission (508) d'au moins l'un parmi la pluralité de messages de liaison montante à la BS (120);
avant la réception (512) de l'accusé de réception de groupe à partir de la BS (120); et
sans la réception d'un autre accusé de réception à partir de la BS (120) indiquant un succès ou un échec de réception par la BS (120) de l'au moins un parmi la pluralité de messages de liaison montante.

3. Procédé (500) selon la revendication 1 ou 2, comprenant en outre:
après la transmission (508) de la pluralité de messages de liaison montante, la sortie du mode inactif amélioré par liaison montante et l'entrée dans un mode connecté de RRC actif,
dans lequel la réception (512) de l'accusé de réception de groupe comprend:
la réception de l'accusé de réception de groupe lors du mode connecté de RRC actif.

4. Procédé (500) selon la revendication 1, 2, ou 3, dans lequel l'établissement (502) des une ou plusieurs ressources d'interface radio en liaison montante en mode inactif comprend:
l'établissement d'une planification périodique ou non périodique pour les une ou plusieurs ressources d'interface radio en liaison montante en mode inactif.

5. Procédé (500) selon l'une quelconque des revendications précédentes, dans lequel l'établissement (502) des une ou plusieurs ressources d'interface radio en liaison montante en mode inactif comprend:
la réception d'une indication des une ou plusieurs ressources d'interface radio en liaison montante en mode inactif à partir de la BS (120) à travers un message de connexion de RRC, un message de libération de RRC, ou un message de redirection de RRC.

6. Procédé (500) selon l'une quelconque des revendications précédentes, dans lequel l'établissement (502) des une ou plusieurs ressources d'interface radio en liaison montante en mode inactif comprend:
l'établissement des une ou plusieurs ressources d'interface radio en liaison montante en mode inactif de manière semi-statique.

7. Procédé (500) selon l'une quelconque des revendications précédentes, dans lequel l'établissement (504) de l'identifiant spécifique à l'UE comprend:
la réception, à partir de la BS (120), de l'identifiant spécifique à l'UE lors du mode connecté de RRC actif.

8. Procédé (500) selon l'une quelconque des revendications précédentes, dans lequel l'établissement (502) des une ou plusieurs ressources d'interface radio en liaison montante en mode inactif comprend:
la réception d'une indication des une ou plusieurs ressources d'interface radio en liaison montante en mode inactif à partir de la BS (120) à travers un UL_IDLE_RNTI.

9. Procédé (600) d'accusé de réception de message réalisé par une station de base (120), BS, d'un réseau de communication sans fil, le procédé (600) comprenant:
l'établissement (602), avec un équipement d'utilisateur (110), UE, du réseau de communication sans fil et pendant que l'UE (110) se trouve dans un mode connecté de contrôle actif de ressource radio, RRC, d'une ou plusieurs ressources d'interface radio en liaison montante en mode inactif à utiliser par l'UE (110) lors d'un mode inactif amélioré par liaison montante;
la réception (604) d'une pluralité de messages de liaison montante à partir de l'UE (110), les messages de liaison montante:
étant reçus lorsque l'UE (110) se trouve dans le mode inactif amélioré par liaison montante;
reçus à travers au moins l'une parmi les une ou plusieurs ressources d'interface radio en liaison montante en mode inactif; et
ayant un identifiant spécifique à l'UE, l'identifiant spécifique à l'UE étant suffisant pour différencier l'UE des autres UE en communication avec la BS;
l'enregistrement (608) d'un succès ou d'un échec de réception de chacun des messages de liaison montante; et
la transmission (610), à l'UE (110) et en réponse à la détermination que l'UE (110) se trouve dans le mode connecté de RRC actif, d'un accusé de réception de groupe à l'UE (110), l'accusé de réception de groupe indiquant le succès ou l'échec de réception de chacun de la pluralité de messages de liaison montante.

10. Procédé (600) selon la revendication 9, comprenant en outre:
la fourniture de l'identifiant spécifique à l'UE à l'UE (110) pendant que l'UE (110) se trouve dans le mode connecté de RRC actif et avant que l'UE (110) se trouve dans le mode inactif amélioré par liaison montante.

11. Procédé (600) selon la revendication 9 ou 10, comprenant en outre:
la détermination d'une planification périodique ou non périodique pour les une ou plusieurs ressources d'interface radio en liaison montante en mode inactif,
dans lequel l'établissement (602) des une ou plusieurs ressources d'interface radio en liaison montante en mode inactif comprend:
la transmission, à l'UE (110), de la planification périodique ou non périodique pour les une ou plusieurs ressources d'interface en liaison montante en mode inactif.

12. Procédé (600) selon la revendication 9, 10, ou 11, dans lequel l'établissement (602) des une ou plusieurs ressources d'interface radio en liaison montante en mode inactif comprend:
la transmission d'une indication des une ou plusieurs ressources d'interface radio en liaison montante en mode inactif à travers un message de connexion de RRC, un message de libération de RRC, ou un message de redirection de RRC.

13. Procédé (600) selon l'une quelconque des revendications 9 à 12, dans lequel l'établissement (602) des une ou plusieurs ressources d'interface radio en liaison montante en mode inactif comprend:
l'établissement d'au moins l'une parmi les une ou plusieurs ressources d'interface radio en liaison montante en mode inactif comme ressource de canal d'accès aléatoire, RACH.

14. Procédé (500, 600) selon l'une quelconque des revendications précédentes, dans lequel au moins l'un parmi les messages de liaison montante est un message unicast ou un message de service de messages courts, SMS.

15. Système pour réaliser le procédé (500, 600) selon l'une quelconque des revendications précédentes.
